**Europäisches Patentamt**

**European Patent Office**

**Office européen des brevets**

(19)

(11) Veröffentlichungsnummer: **0 211 215**
**B1**

# EUROPÄISCHE PATENTSCHRIFT

(12)

(45) Veröffentlichungstag der Patentschrift:
**10.01.90**

(21) Anmeldenummer: **86108642.9**

(22) Anmeldetag: **25.06.86**

(51) Int. Cl.⁴: **B 62 D 33/06**

(54) **Lastkraftwagen mit schwenkbarem Fahrerhaus.**

(30) Priorität: **30.07.85 DE 3527203**

(43) Veröffentlichungstag der Anmeldung:
**25.02.87 Patentblatt 87/9**

(45) Bekanntmachung des Hinweises auf die Patenterteilung:
**10.01.90 Patentblatt 90/2**

(84) Benannte Vertragsstaaten:
**AT CH DE FR GB IT LI NL SE**

(56) Entgegenhaltungen:
**DE-A- 2 338 659**
**DE-A- 2 459 252**
**DE-U- 7 108 127**

(73) Patentinhaber: **MAN Nutzfahrzeuge Aktiengesellschaft,**
**Dachauer Strasse 667 Postfach 50 06 20,**
**D-8000 München 50 (DE)**

(72) Erfinder: **Heuer, Fritz, Pertrichplatz 9,**
**D-8067 Petershausen (DE)**

ACTORUM AG

## Beschreibung

Die Erfindung betrifft einen Lastkraftwagen mit einem schwenkbaren Fahrerhaus und einer Schaltvorrichtung für Wechselgetriebe mit einem durch die Öffnung im Boden des Fahrerhauses durchgeführten, auch im ausgeschwenkten Zustand des Fahrerhauses mit dem Schaltgestänge verbundenen Schalthebel, der mittels eines elastischen Balges und einer an diesen anschließenden elastischen Dichtung gegenüber der Bodenöffnung abgedichtet ist.

Es ist eine derartige Einrichtung zum Abdichten kippbarer Fahrerhäuser bekannt (DE-A-2 338 659). Neben einer Dichtung zum Abdichten einer den Schalthebel umgebenden Glocke muß hier eine separate Spiralfeder als weiteres Element für den Ausgleich der Fahrerhausfederung eingesetzt werden.

Auch aus der DE-U-7 108 127 ist nicht zu entnehmen, wie mittels der Dichtung auch der Ausgleich der Fahrerhausfederung erfolgen soll. Außerdem ist kein den Schalthebel umgebender elastischer Faltenbalg vorgesehen, an dem die Dichtung angeschlossen werden könnte.

Aufgabe der Erfindung ist es eine sichere, durch Ein- und Ausschwenken des Fahrerhauses nicht zu beeinträchtigende Verbindung von Schalthebel und Schaltgestänge bei guter Abdichtung der Fahrerkabine zum Motor und Getrieberaum aufzufinden.

Dies wird erfindungsgemäß dadurch erreicht, daß eine elastische Dichtung, bestehend aus einem weitgehend zylindrischen Zentralkörper und einem damit einstückig verbundenen Ringflansch, über eine zentrale Öffnung den Schalthebel dichtend umgreift, daß der Ringflansch fest in einer Hülse gefaßt ist, die mit dem unteren Ende des den Schalthebel schützenden, elastischen Balges fest verbunden ist und das untere Ende des Balges in axialer Richtung gegeneinander versetzte Dichtlippen aufweist, die in Betriebsstellung, des Fahrzeuges von einem mit dem Boden des Fahrerhauses festverbundenen Topf dichtend überstülpt sind, wobei die Dichtung mit ihrem Boden fest gegen eine mit einem dem Schalthebel zugeordneten Lagerblock verbundene Grundplatte abgestützt ist. Hierdurch wird mit einfachen Mitteln unter Einbeziehung des die Schaltstange abdeckenden, sowieso vorhandenen elastischen Balges eine sehr gute Abdichtung zwischen dem Innenraum des Fahrerhauses und dem Motor- und Getrieberaum erzielt. Nach ergänzenden Merkmalen der Erfindung ist bei Außerbetriebstellung des Fahrzeuges bzw. im ausgeschwenkten Zustand des Fahrerhauses die Dichtung entspannt, wobei der Ringflansch nach innen ausgebaucht ist, während in Betriebsstellung des Fahrzeuges bzw. im eigenschwenkten Zustand des Fahrerhauses der Ringflansch nach oben gewölbt ist, wobei der Topf unter Andruck auf den vom unteren Balgende eingefaßten Ringflansch, diesen nach unten biegend, aufsitzt, so daß die Dichtwirkung zwischen Fahrerhaus und dem Motor- und Getriebe kapselnden Rahmen durch eine Kombination von Deformation und Kompression erzeugt ist, wobei der die Dichtlippen beaufschlagende fest mit dem Boden des Fahrerhauses verbundene Topf Toleranzen in der Zuordnung der Teile ausgleichen kann. Diese erfindungsgemäßen Maßnahmen ergeben eine gute Dichtwirkung, ohne die Lebensdauer des Dichtelementes, auch bei rauhem Betrieb, wesentlich zu beeinträchtigen. Nach einem weiteren Merkmal der Erfindung weist die Dichtung im Bereich des Zentralkörpers die Formsteifigkeit beeinflußende Ausnehmungen auf. Diese an sich bekannte Ausführungsform gestattet es, unter Ausnutzung des vorhandenen Raumes die Formsteifigkeit der Dichtung zu verändern und den gewollten Bedingungen anzupassen. In weiterer Ausgestaltung der Erfindung weist der Balg an seinem unteren Ende eine Fußlippe auf, die das untere Ende der Hülse hintergreift. Solche Art ist eine absolut funktionierende Dichtung gewährleistet.

Weitere Merkmale und Vorteile der Erfindung sind den Ansprüchen, der Beschreibung und den Zeichnungen zu entnehmen.

Ein Ausführungsbeispiel der Erfindung ist in der Zeichnung dargestellt.

Es zeigen:

Fig. 1 eine Schalthebelanordnung mit Dichtung im eingeschwenkten Zustand des Fahrerhauses,

Fig. 2 eine Schalthebelanordnung mit Dichtung im ausgeschwenkten Zustand des Fahrerhauses,

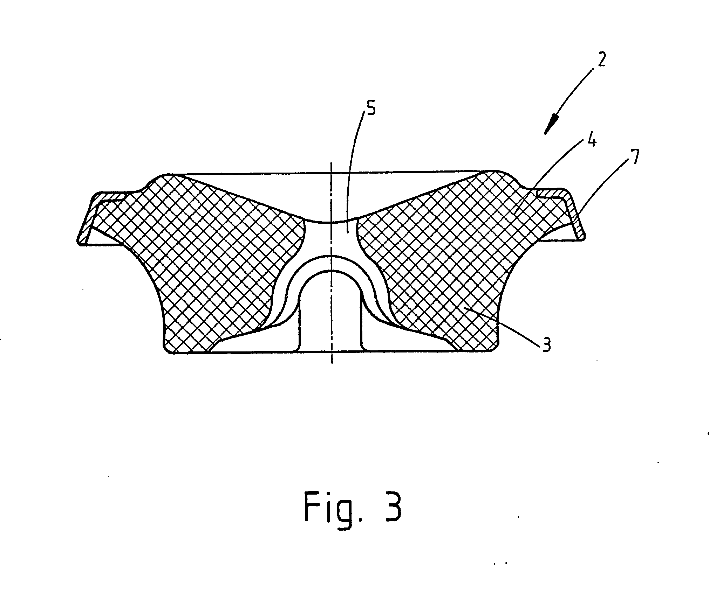

Fig. 3 ein Dichtelement im Schnitt und

Fig. 4 eine Dichtung mit Ausnehmungen in der Draufsicht.

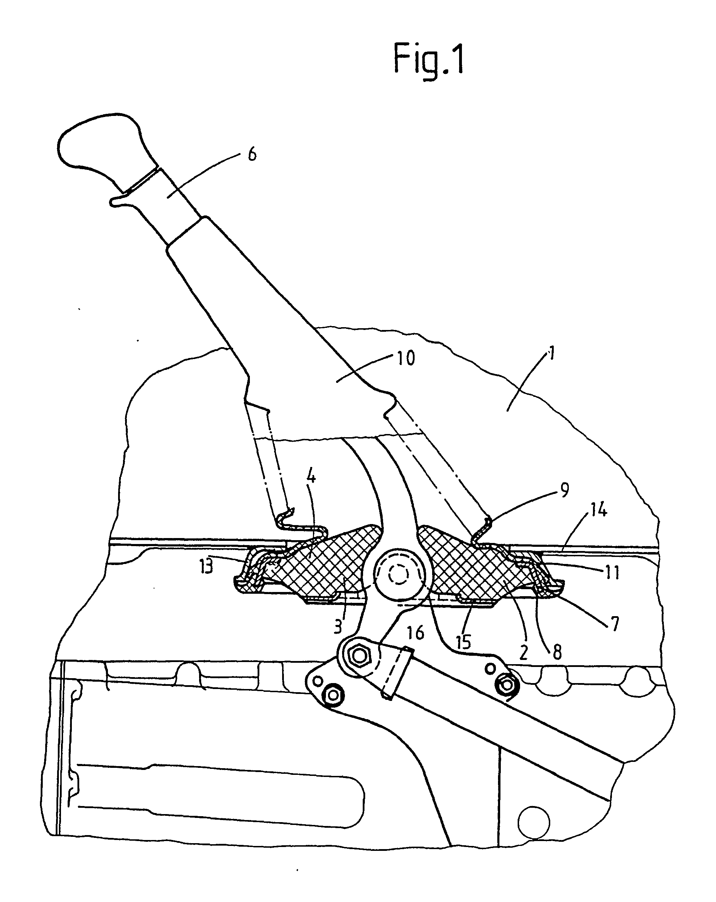

Fig. 1 zeigt angedeutet den Motor- und Getrieberaum eines Lastkraftwagens mit einem darüber angeordneten Fahrerhaus 1. In eine Öffnung im Boden (14) des Fahrerhauses (1) ragt eine Dichtung 2 hinein, die auf einer am Lagerbock 16 fest angebrachten Grundplatte 15 aufliegt. Die Dichtung 2 besteht im wesentlichen aus einem Zentralkörper 3 und einem damit einstückig verbundenen Ringflansch 4, der von einer Hülse 7 fest umfaßt ist. Über die Hülse 7 ist das untere Ende 9 des Balges 10 gestülpt, wobei das Fußteil innenseitig das freie Ende der Hülse hintergreift und somit eine formschlüssige feste Verbindung zwischen der Dichtung 2 und dem den Schalthebel 6 schützenden, elastischen Balg 10 besteht. Am äußeren Umfang des unteren Endes 9 vom Balg 10 sind die in weitgehend radialer Richtung sich erstreckenden, einstückig mit dem Balg 10 verbundenen Dichtlippen 11, 12 angeordnet, die von einem fest mit dem Fahrerhausboden verbundenen, unterseitig desselben angebrachten Topf 13 dichtend überstülpt werden, wobei die obere Dichtung aus einer horizontalen in eine fast vertikale Ebene gedrückt wird.

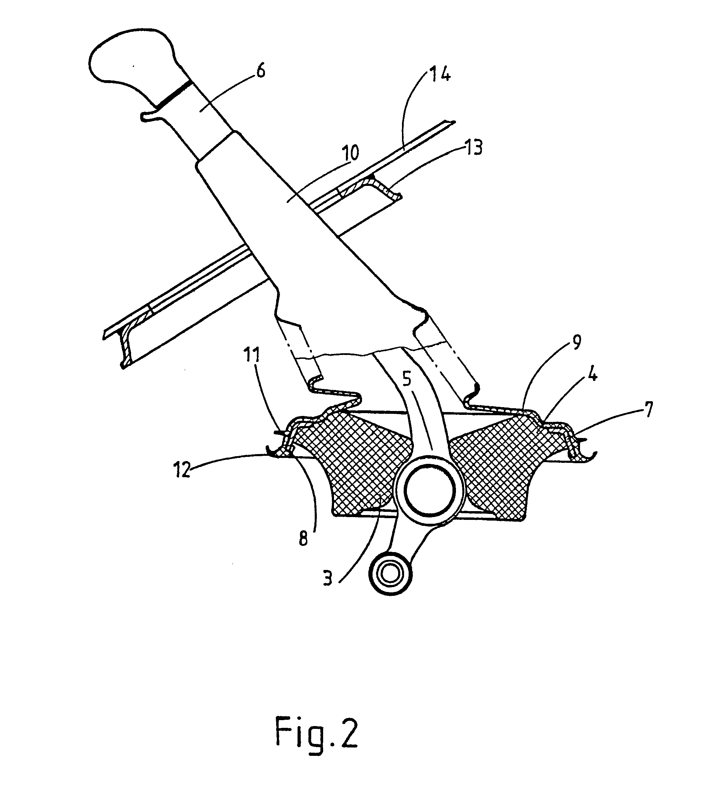

In Fig. 2 ist das Fahrerhaus (1) im geschwenkten und die Dichtung 2 im nicht komprimierten Zustand dargestellt.

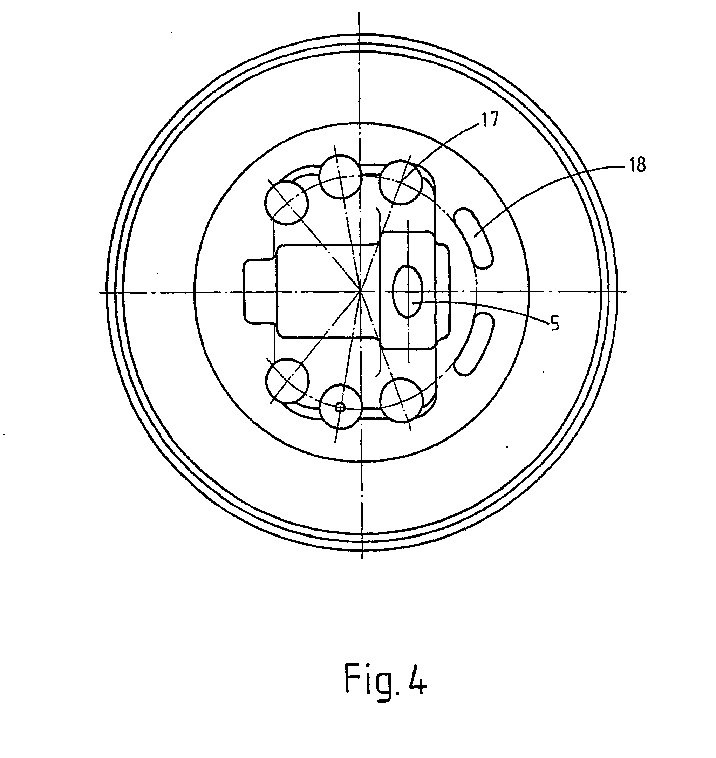

In Fig. 4 sind Ausnehmungen 17, 18, gezeigt, die sich im mittleren Bereich der Dichtung 2 befinden. Sie dienen dazu, die Steifigkeit und damit die Verformbarkeit ohne Konturänderung der Dichtung beeinflußbar zu machen.

## Patentansprüche

1. Lastkraftwagen mit einem schwenkbaren Fahrerhaus und einer Schaltvorrichtung für Wechselgetriebe mit einem durch die Öffnung im Boden (14) des Fahrerhauses (1) durchgeführten, auch im ausgeschwenkten Zustand des Fahrerhauses mit dem Schaltgestänge verbundenen Schalthebel (6), der mittels eines elastischen Balges (10) und einer an diesen anschließenden elastischen Dichtung (2) gegenüber der Bodenöffnung abgedichtet ist, dadurch gekennzeichnet,

— daß die elastische Dichtung (2), bestehend aus einem weitgehend zylindrischen Zentralkörper (3) und einem damit einstückig verbundenen Ringflansch (4) ohne Andruck durch eine Spiralfeder über eine zentrale Öffnung (5) den Schalthebel (6) dichtend umgreift, wobei der Übergang in der Dichtung (2) zwischen Zentralkörper (3) und Ringflansch (4) kurvenförmig und die obere Begrenzungsfläche muldenförmig ausgebildet sind,
— daß der Ringflansch (4) fest in einer Hülse (7) gefaßt ist, die mit dem unteren Ende (9) des den Schalthebel (6) schützenden, elastischen Balges (10) fest verbunden ist,
— und daß das untere Ende (9) des Balges (10) in axialer Richtung gegeneinander versetzte Dichtlippen (11, 12) aufweist,
— die in Betriebsstellung des Fahrzeuges von einem mit dem Boden des Fahrerhauses fest verbundenen Topf (13) dichtend überstülpt sind,
— wobei die Dichtung (2) mit ihrem Boden fest gegen eine mit dem Lagerbock (16) verbundene Grundplatte (15) abgestützt ist.

2. Lastkraftwagen nach Anspruch 1, dadurch gekennzeichnet, daß bei Außerbetriebstellung des Fahrzeuges bzw. im ausgeschwenkten Zustand des Fahrerhauses (1) die Dichtung (2) entspannt ist, wobei der Ringflansch (4) leicht nach innen ausgebaucht ist, während in Betriebsstellung des Fahrzeuges bzw. im eigenschwenkten Zustand des Fahrerhauses (1) der Ringflansch (4) nach oben gewölbt ist, wobei der Topf (13) unter Andruck auf den vom unteren Balgende (9) eingefaßten Ringflansch (4), diesen nach unten biegend, aufsitzt.

3. Lastkraftwagen nach Anspruch 1 oder 2, dadurch gekennzeichnet, daß die Dichtwirkung zwischen dem Fahrerhaus (1) und dem Motor und Getriebe kapselnden Rahmen durch eine Kombination von Deformation und Kompression erzeugt ist.

4. Lastkraftwagen nach den Ansprüchen 1 bis 3, dadurch gekennzeichnet, daß die Dichtung (2) im Bereich des Zentralkörpers (3) die Formsteifigkeit beeinflussende Ausnehmungen (17, 18) aufweist.

5. Lastkraftwagen nach einem oder mehreren der Ansprüche 1 bis 4, dadurch gekennzeichnet, daß die Dichtung (2) ein aus Polyurethan o. ä. Kunststoffen geschäumter Körper ist.

6. Lastkraftwagen nach einem oder mehreren der Ansprüche 1 bis 5, dadurch gekennzeichnet, daß der Balg (10) an seinem unteren Ende (9) eine Fußlippe (8) aufweist, die das untere Ende der Hülse (7) hintergreift.

7. Lastkraftwagen nach einem oder mehreren der Ansprüche 1 bis 6, dadurch gekennzeichnet, daß der Übergang in der Dichtung (2) zwischen Zentralkörper (3) und Ringflansch (4) kurvenförmig und die obere Begrenzungsfläche muldenförmig ausgebildet sind.

## Claims

1. A lorry with a pivotable driver's cabin and having a switching device for change-speed gears, comprising a gear lever (6) which is led through the opening in the floor (14) of the driver's cabin (1) and which is connected with the gear linkage even in the pivoted-out position of the driver's cabin and which is sealed in relation to the opening in the floor by means of an elastic sheath (10) and of an elastic seal (2) which is connected with the said sheath, characterised
— in that the elastic seal (2), consisting of a substantially cylindrical central member (3) and of a ring flange (4) integrally connected therewith, engages sealingly, without contact pressure by means of a spiral spring, via a central opening (5), around the gear lever (6), the transition in the seal (2) between the central member (3) and the ring flange (4) being of curved shape and the upper boundary surface being of through-shaped construction,
— in that the ring flange (4) is gripped securely in a sleeve (7) which is securely connected with the lower end (9) of the elastic sheath (10) which protects the gear lever (6),
— and in that the lower end (9) of the sheath (10) has sealing lips (11, 12) which are offset in relation to one another in the axial direction,
— over which lips there is upturned sealingly, in the operational position of the vehicle, a pot (13) which is securely connected to the floor of the driver's cabin,
— the seal (2) being supported with its base firmly against a base plate (15) which is connected to the bearing block (16).

2. A lorry according to claim 1, characterised in that in the non-operational position of the vehicle and/or in the pivoted-out state of the driver's cabin (1), the seal (2) is free of tension, the ring flange (4) thus bulging slightly inwardly, whereas in the operational position of the vehicle and/or in the pivoted-in state of the driver's cabin (1), the ring flange (4) is arched upwardly, the pot (13) then being seated thereon under the contact pressure of the ring flange (4) which is enclosed by the lower sheath end (9), bending the said flange downwards.

3. A lorry according to claim 1 or 2, characterised in that the sealing action between the driver's cabin (1) and the frame which encases the motor and drive is produced by a combination of deformation and compression.

4. A lorry according to the claims 1 to 3, characterised in that the seal (2) has recesses (17, 18) in the region of the central member (3) which influence the rigidity of shape.

5. A lorry according to one or more of the claims 1 to 4, characterised in that the seal (2) is a foamed member made of polyurethane or of similar synthetic plastics materials.

6. A lorry according to one or more of the claims 1 to 5, characterised in that the sheath (10) has on its lower end (9) a foot-like lip (8) which engages behind the lower end of the sleeve (7).

7. A lorry according to one or more of the claims 1 to 6, characterised in that the transition in the seal (2) between the central member (3) and the ring flange (4) is of curved shape, and the upper boundary surface is of through-shaped construction.

**Revendications**

1. Camion comportant une cabine de routier basculante et un dispositif d'enclenchement pour la boîte de vitesses, comportant un levier de vitesses (6) passé à travers l'orifice pratiqué dans le plancher (14) de la cabine de conducteur (1) et relié à la tringlerie de vitesse même lorsque la cabine de conducteur se trouve à l'état relevé, levier isolé de manière étanche par rapport à l'orifice de plancher, à l'aide d'un soufflet (10) élastique et d'un joint d'étanchéité élastique (2) raccordé à ce soufflet, caractérisé par le fait que:

— le joint d'étanchéité élastique (2), se composant d'un corps central (3) pratiquement cylindrique et d'une bride annulaire (4) cylindrique reliée d'une seule pièce avec ce dernier, entoure le levier de vitesses (6) par l'intermédiaire d'un orifice central (5), en constituant une étanchéité et sans exercer de pression par un ressort spiral, la transition, dans le joint d'étanchéité (2), entre corps central (3) et bride annulaire (4) étant de forme courbe et la surface de délimitation supérieure étant réalisée en forme d'auge,

— la bride annulaire (4) est saisie rigidement dans un manchon (7) qui est rigidement relié à l'extrémité inférieure (9) du soufflet élastique (10) protégeant le levier de vitesses (6),

— et l'extrémité inférieure (9) du soufflet (10) présente des lèvres d'étanchéité (11, 12) décalées entre elles en direction axiale,

— lèvres qui sont recouvertes par un pot (13) qui est rigidement relié au plancher de la cabine du conducteur lorsque cette dernière est en position de fonctionnement,

— le joint d'étanchéité (2) étant rigidement soutenu par son fond, contre une plaque de base (15) reliée au support de palier.

2. Camion selon la revendication 1, caractérisé en ce que le joint d'étanchéité (2) se trouve détendu lorsque le véhicule est en position hors service ou lorsque la cabine du conducteur (1) est à l'état basculé, le joint d'étanchéité (2) est détendu, la bride annulaire (4) étant facilement bombée vers l'intérieur, tandis qu'en position de fonctionnement du véhicule ou à l'état rabattu de la cabine du conducteur (1), la bride annulaire (4) est bombée vers le haut, le pot (13) reposant sous pression sur la bride annulaire (4) engagée par l'extrémité inférieure du soufflet (9), en repliant ce dernier vers le bas.

3. Camion selon la revendication 1 ou 2, caractérisé en ce que l'effet d'étanchéité entre la cabine de conducteur (1) et le châssis renfermant le moteur et la boîte de vitesses est produit par une combinaison de déformation et de compression.

4. Camion selon l'une des revendications 1 à 3, caractérisé en ce que le joint d'étanchéité (2) présente, dans la zone du corps central (3) les évidements (17, 18) influençant la rigidité de forme.

5. Camion selon une ou plusieurs des revendications 1 à 4, caractérisé en ce que le joint d'étanchéité (2) est un corps mousse en polyuréthane ou en d'autres matières plastiques.

6. Camion selon une ou plusieurs des revendications 1 à 5, caractérisé en ce que le soufflet (10) présente à son extrémité inférieure (9) une lèvre de pied (8) saisissant à l'arrière l'extrémité inférieure du manchon (7).

7. Camion selon une ou plusieurs des revendications 1 à 6, caractérisé en ce que la transition dans le joint d'étanchéité (2), entre corps central (3) et bride annulaire (4) est de forme courbée et la surface de délimitation supérieure est réalisée en forme d'auge.

# Fig.1

Fig.2

Fig. 3

Fig. 4